Europäisches Patentamt

European Patent Office

Office européen des brevets

(19)

(11) Veröffentlichungsnummer: **0 529 043 B1**

(12) **EUROPÄISCHE PATENTSCHRIFT**

(45) Veröffentlichungstag der Patentschrift: **14.12.94**

(51) Int. Cl.5: **F16B 19/02**

(21) Anmeldenummer: **92906626.4**

(22) Anmeldetag: **18.03.92**

(86) Internationale Anmeldenummer:
**PCT/EP92/00589**

(87) Internationale Veröffentlichungsnummer:
**WO 92/16759 (01.10.92 92/25)**

(54) **ELEMENT ZUM POSITIONIEREN VON BAUTEILEN.**

(30) Priorität: **23.03.91 DE 9103621 U**

(43) Veröffentlichungstag der Anmeldung:
**03.03.93 Patentblatt 93/09**

(45) Bekanntmachung des Hinweises auf die
Patenterteilung:
**14.12.94 Patentblatt 94/50**

(84) Benannte Vertragsstaaten:
**CH DE FR GB LI**

(56) Entgegenhaltungen:
**DE-A- 1 061 573**
**DE-A- 2 505 878**
**DE-U- 9 103 621**
**GB-A- 433 038**
**US-A- 3 945 294**

(73) Patentinhaber: **CONNEX AG**
**Postfach 1 75**
**CH-6260 Reiden (CH)**

(72) Erfinder: **HAACK, Johannes**
**Hurnimattweg 4**
**CH-2557 Studen (CH)**

(74) Vertreter: **Ouermann, Helmut, Dipl.-Ing.**
**Postfach 61 45**
**D-65051 Wiesbaden (DE)**

**Beschreibung**

Die Erfindung betrifft ein Element zum Positionieren von Bauteilen wie beispielsweise von Formplatten einer Formvorrichtung, wobei dieses Element in entsprechende Bohrungen, Sacklöcher in den Bauteilen einsetzbar ist und aus einem Ringmantel um eine Axialbohrung besteht, der einen durchgehenden Schlitz aufweist.

In einer Vielzahl von Anwendungsgebieten ist es notwendig, zwei Bauteile miteinander lagezupositionieren. Dies gilt in besonderem Masse für Formplatten von Formeinrichtungen, wie beispielsweise für Formplatten aus einer Feinschneidvorrichtung bzw. in der Stanz- oder Presstechnik. Eine derartige Formplatte kann aus mehreren einzelnen, zusammengesetzten Plattenelementen bestehen, welche jeweils einen Teil der Form bestimmen. Es versteht sich von selbst, dass derartige Bauteile sehr positionsgenau zusammengesetzt werden müssen.

Im wesentlichen werden eine feste und eine lösbare Lagepositionierung unterschieden. Im ersteren Fall bleiben die Bauteile miteinander verbunden, während sie im zweiten Fall nach einem bestimmten Zeitraum wieder voneinander getrennt werden sollen.

Zur Lagepositionierung sind bisher Zylinder- oder Kegelstifte aber auch Spann- oder Spreizstifte bekannt, wie sie in der Figurenbeschreibung näher dargestellt sind.

Vor allem, wenn es sich um trennbare Bauteile handelt, sollte das Positionierungselement wieder demontiert werden können, d.h., ebenfalls wiederverwendbar sein. Es darf sich aus diesem Grunde nicht beschädigen, was beispielsweise durch Kaltschweissen beim Eintreiben des Positionierungelementes in die entsprechenden Bohrungen geschieht. Desgleichen sollen selbstverständlich auch die Bohrungen in den Bauteilen nicht beschädigt werden, was immer dann geschieht, wenn das Element einen grösseren Aussendurchmesser als der Innendurchmesser der Bohrung aufweist.

Aus der DE-A-2 505 878 ist ein Element zum Positionieren von Bauteilen der eingangs genannten Art bekannt. Es weist in nicht eingespanntem Zustand eine konische Gestalt auf und ist so dimensioniert, daß es durch das einseitige Einspannen eine zylindrische Gestalt einnimmt. Das Element findet beispielsweise als inneres Führungselement für eine Tellerfedersäule Verwendung, bei der es nur über einen relativ geringen Teil seiner Länge eingespannt ist.

Der vorliegenden Erfindung liegt die Aufgabe zugrunde, ein Element der oben genannten Art zu entwickeln, welches grössere Toleranzen sowohl bezüglich des Aussendurchmessers des Elementes als auch des Innendurchmessers der Bohrungen und des Abstandes der Bohrungen zulässt, bei dem weder Element noch Bohrungen beschädigt werden und welches auf einfache Weise aus der Bohrung entnommen werden kann, ohne diese zu beschädigen.

Zur Lösung dieser Aufgabe führt, dass in die Axialbohrung ein elastischer Stab eingesetzt ist, welcher von ein oder beiden Seiten her mit Druck beaufschlagbar ist.

Dieser Druck insbesondere von beiden Seiten her bewirkt, dass sich der Durchmesser des elastischen Stabes verändert und den Ringmantel unter Druck setzt, so dass sich dieser beispielsweise in einer Bohrung aufspreizt und einen Kraft- bzw. Formschluss mit der Innenwand der Bohrung eingeht.

Für die Beaufschlagung mit Druck kann einmal daran gedacht sein, die eine Seite des Elementes zu schliessen und nur von der anderen Seite her eine Druckschraube einzuschrauben. Bevorzugt ist jedoch in die Axialbohrung von beiden Seiten her ein Innengewinde eingeformt, in welches jeweils eine Druckschraube eingeschraubt werden kann. Somit ist selbst in einer Sacklochbohrung zumindest eine Druckschraube von aussen her angreifbar, so dass beispielsweise mittels eines Innensechskantschlüssels diese Druckschraube nach Einsetzen des Elementes in die entsprechende Sacklochbohrung in die Axialbohrung eingeschraubt werden kann und einen Druck auf den elastischen Stab ausübt, der zu einem Aufspreizen des Ringmantels führt. Der Stab selbst ist zweckmäßig aus Chloropren-Kautschuk (Warenzeichen Neoprene) geformt.

Ein derartiges Element ist auch sehr leicht lösbar, da hierzu einfach der Druck auf den elastischen Stab aufgehoben werden muss und dann das Element in seine ursprüngliche Form zurückkehrt, aus der es aus der Bohrung herausfällt.

Ein derartiges Element wird bevorzugt aus einen harten Werkstoff geformt, jedoch sind auch andere Werkstoffe denkbar, da es den Kraft/Formschluss erst nach dem Einsetzen in die Bohrung eingeht und es so zu keinem Kaltverschweissen in der Bohrung kommt.

Ferner ist es auch gleichgültig, ob die Bauteile aus harten oder weichem Material geformt sind.

Hervorzuheben ist besonders, dass dieses Element sämtliche Vorteile eines bisher bekannten, jedoch sehr teuren Spreizstiftes aufweist, dabei aber ausserordentlich kostengünstig herzustellen ist. Das Einsetzen kann von Hand geschehen, zu seiner Festlegung genügt ein normales Werkzeug, wie beispielsweise ein Innensechskantschlüssel. Der Anwendungsbereich ist universell. Die Toleranzen, die dieses Element zulässt, sind aussergewöhnlich gross.

In einer bevorzugten Ausführungsform der Erfindung soll der Ringmantel randwärtig eine Fase aufweisen, an welche eine plane Stirnfläche anschliesst. Durch diese Fase mit planer Stirnfläche wird insbesondere ein Einsetzen des Elementes in eine entsprechende Bohrung erleichtert. Die Fase gleitet an der Randkante der Bohrung ab, wobei der o.g. Schlitz verengt wird, so dass ein Element mit einem erheblich grösseren Aussendurchmesser in eine entsprechende Bohrung mit einem vorbestimmten Innendurchmesser eingesetzt werden kann. Zum Einschlagen des Elementes kann ein einfacher Dorn benutzt werden, der eine Schulter ausbildet, welche auf der planen Stirnfläche aufsitzt.

Unabhängig von der Ausbildung der planen Stirnfläche, aber bevorzugt zusammen mit diesem und dem in Anspruch 1 genannten Merkmal, soll bei einem weiteren Ausführungsbeispiel eines Elementes der Schlitz zumindest abgerundete Aussenränder aufweisen. Diese abgerundeten Aussenränder des Schlitzes, wobei hier ein gerader, eine helixförmiger oder ein Wellenschlitz eingeformt sein kann, bewirken, dass beim Eintreiben des Elementes in eine entsprechende Bohrung es nicht zu einem spanabhebenden Vorgang an den Wänden der Bohrung kommt. Dies ist ein erheblicher Vorteil, der sich sowohl beim Eintreiben des Elementes, als auch bei dessen Entfernung aus der Bohrung positiv auswirkt. Aus diesem Grunde sollen jeweils auch beide Aussenränder des Schlitzes abgerundet sein.

Weitere Vorteile, Merkmale und Einzelheiten der Erfindung ergeben sich aus der nachfolgenden Beschreibung bevorzugter Ausführungsbeispiele sowie anhand der Zeichnung; diese zeigt in

Figur 1 einen Querschnitt durch zwei Bauteile, welche mittels zweier Zylinderstifte positioniert sind;

Figur 2 eine Übersicht über teilweise im Querschnitt und teilweise in Gebrauchslage dargestellte Stifte zur Lagepositionierung von Bauteilen nach dem Stand der Technik;

Figur 3 ein mit Fasen und abgerundeten Außenrändern versehenes Element in einer räumlichen Darstellung;

Figur 4 einen teilweise dargestellten Längsschnitt durch das Element gem. Fig. 3 entlange Linie IV - IV;

Figur 5 eine Draufsicht auf einen Teilausschnitt des Elementes gem. Fig. 3;

Figur 6 einen teilweise dargestellten Querschnitt durch das Element gem. Fig, 3 entlang Linie VI - VI in Fig. 5;

Figur 7 einen teilweise dargestellten Längsschnitt durch das Element nach Figur 3 entlang Linie VII - VII in Fig.5;

Figur 8 einen vergrössert dargestellten Querschnitt durch zwei Bauteile mit einem teilweise aufgeschnitten dargestellten Element zum Lagepositionieren dieser Bauteile in Gebrauchslage;

Figur 9 einen Querschnitt durch zwei Bauteile mit einem teilweise geschnitten dargestellten weiteren Ausführungsbeispiel eines Elementes zum Lagepositionieren dieser Bauteile in Gebrauchslage;

Figur 10 einen teilweise dargestellten Querschnitt durch zwei Bauteile sowie ein Element zum Lagepositionieren dieser Bauteile mit einem Werkzeug zum Eintreiben dieses Elementes;

Figur 11 einen teilweise dargestellten Querschnitt durch zwei Bauteile, welche durch ein weiteres Ausführungsbeispiel eines erfindungsgemässen Elementes zum Lagepositionieren dieser Bauteile verbunden sind und welchem eine Einrichtung zum Entfernen dieses Elementes zugeordnet ist;

Figur 12 eine Darstellung entsprechend Fig. 11 mit einem weiteren Ausführungsbeispiel einer Einrichtung zum Entfernen des Elementes zur Lagepositionierung der Bauteile;

Figur 13 einen Längsschnitt durch ein weiteres Ausführungsbeispiel eines Elementes zum Lagepositionieren von Bauteilen;

Figur 14 eine teilweise gebrochen dargestellte Draufsicht auf einen Gewindestift zur Verwendung in einem Element gem. Fig. 13;

Figur 15 eine Draufsicht auf einen elastischen Stab zur Verwendung in einem Element gem. Fig.13;

Figur 16 einen teilweise dargestellten Querschnitt durch zwei Bauteile mit einem eingesetzten Element gem. Fig. 13 zum Lagepositionieren dieser Bauteile in Gebrauchslage;

Figur 17 einen Querschnitt durch zwei Bauteile mit dem eingesetzten Element gem. Fig. 13 in einer weiteren Gebrauchslage.

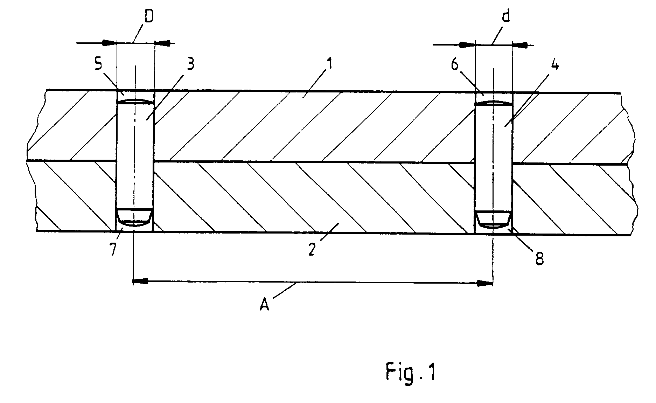

Gem. Fig. 1 werden zwei Bauteile 1 und 2, beispielsweise zwei Formplatten, miteinander durch Zylinderstifte 3 und 4 verbunden, wobei diese Zylinderstifte 3 und 4 in entsprechenden Bohrungen 5, 7 sowie 6, 8 der Bauteile I bzw. 2 sitzen. Es ist verständlich, dass zur exakten Lagepositionierung eine hohe Passgenauigkeit, also enge Toleranzen sowohl bezüglich eines Aussendurchmessers d des Zylinderstiftes 3 bzw. 4 als auch des Innendurchmessers D der Bohrungen 5, 7 bzw. 6, 8 zu fordern ist. Ferner wird auch noch eine enge Toleranz bezüglich des Abstandes A der Bohrungen 5, 7 bzw. 6, 8 zueinander gefordert. Die Genauigkeiten liegen unterhalb der ISO - Qualität 7. Das bedeutet folgende Toleranzen:

$$D = 10 \; ^{H7} \qquad\qquad 10 = \begin{matrix} + & 0,015 \\ - & 0 \end{matrix}$$

$$d = 10 \; _{m6} \qquad\qquad 10 = \begin{matrix} + & 0,015 \\ + & 0,006 \end{matrix}$$

$$A = 100 \; JT5 \qquad\qquad 100 = \pm \; 0,0075$$

Genormte Zylinderstifte 3 bzw. 4 mit einem Durchmesser d von 10 mm haben also eine Toleranz von 9 µm, die Bohrungen eine Toleranz von 15 µm und der Abstand A 100 mm eine Toleranz von 15 µm.

Aus diesen Toleranzangaben ist leicht ersichtlich, dass der Stift ein positives spiel von maximal 9 µm aufweisen kann. Dies bedeutet aber, dass er in den Bohrungen 5, 7 bzw. 6, 8 lose sitzt und herausfallen kann.

Umgedreht kann der Stift aber auch ein negatives Spiel von 15 µm, auch Übermass genannt, im Verhältnis zu den Bohrungen 5, 7 bzw. 6, 8 aufweisen und somit einen Presssitz einnehmen, der jedoch beim Eintreiben des Zylinderstiftes 3, 4 zum Kaltschweissen neigt, so dass der Zylinderstift 3 bzw. 4 selbst und/oder die Bohrungen 5, 7 bzw. 6, 8 beschädigt werden. Ein derartiger Stift ist nicht mehr lösbar.

Wird nun zusätzlich noch die Toleranz des Abstandes A der Bohrungspaare 5, 7 bzw. 6, 8 von 15 µm in Betracht gezogen, so ist eine Lagepositionierung mit bekannten Zylinderstiften 3, 4 nicht möglich bzw. bildet keine brauchbare Positionierung, die lösbar ist.

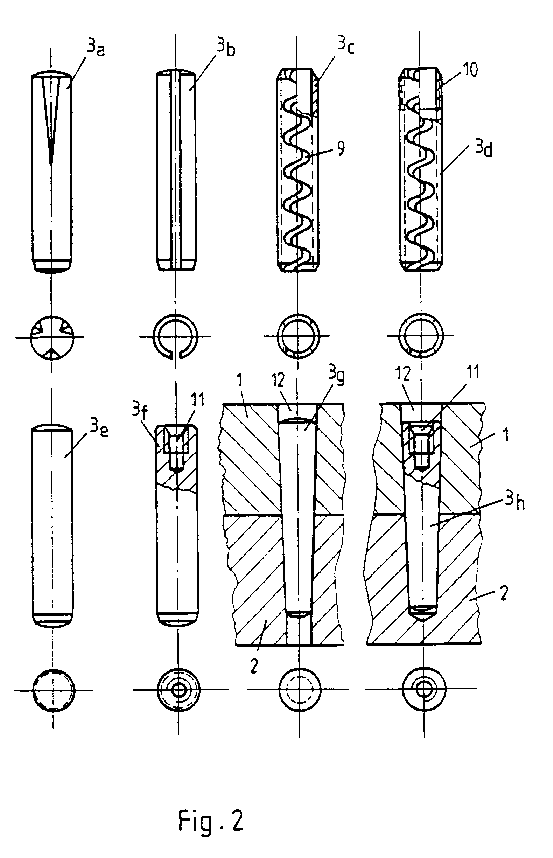

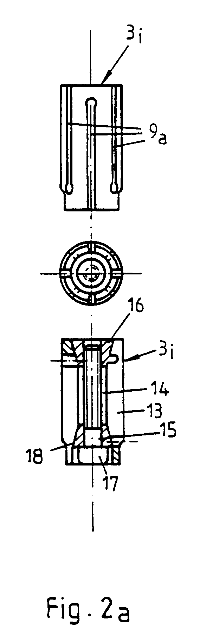

Gem. Fig. 2 soll eine Übersicht über bekannte Stifte gegeben werden, welche Teilprobleme lösen, dagegen aber regelmässig andere Probleme aufweisen. Mit 3a ist ein Kerbstift bezeichnet, der nur zur Dauerpositionierung von zwei Bauteilen 1 und 2 einsetzbar ist. Er wird in der Regel in weiche Bauteile eingetrieben und neigt dort zum Kaltverschweissen.

Bei dem Stift 3b handelt es sich um einen Spannstift, der ebenfalls zur Dauerpositionierung zweier Bauteile benutzt wird und sowohl für harte als auch weiche Bauteile einsetzbar ist. Der Stift selbst kann dementsprechend aus hartem oder weichem Werkstoff geformt sein.

3c bezeichnet einen Spannstift mit einem wellenförmigen Schlitz 9, der sowohl für eine dauerhafte als auch für eine lösbare Positionierung zweier Bauteile 1 und 2 eingesetzt wird. Die Bauteile können hart oder weich sein, während der Spannstift selbst aus hartem Material gefertigt ist. In harten Bauteilen ist der Spannstift nur bedingt wiedereinsetzbar, da sich der Stift beim Eintreiben beschädigt. Beim Eintreiben in weiche Bauteile wiederum kommt es zu einer Spanbildung durch die Ränder des Schlitzes 9, so dass die Bohrungen 5, 7 bzw. 6, 8 beschädigt werden.

Mit 3d ist ein Spannstift ähnlich demjenigen 3c gekennzeichnet, der jedoch stirnwärts ein Innengewinde 10 aufweist, in welches eine entsprechende Einrichtung zum Herausziehen des Spannstiftes 3d eingesetzt werden kann.

Bei dem Stift 3e handelt es sich um einen einfachen Zylinderstift, welcher aus hartem oder weichem Material geformt sein kann. Wird ein entsprechender harter Stift in ein hartes Bauteil eingeschlagen, so kommt es entweder zu einer Kaltverschweissung oder aber nur zu einem losen Sitz. Wird ein harter Stift in ein weiches Bauteil eingeschlagen, so verschweisst sich der Stift in den entsprechenden Bohrungen kalt. Ist der Stift weich und das Bauteil hart, so wird ebenfalls der Stift kaltverschweisst. Dies bedeutet, dass derartige Zylinderstifte 3e nur in geringem Umfange wiederverwendbar sind, wobei ferner auf erhebliche Fertigungsprobleme wegen der engen Masstoleranzen hinzuweisen ist.

Der Stift 3f unterscheidet sich von dem Stift 3e nur durch ein Gewindesackloch 11 zum Einsetzen einer entsprechenden Einrichtung zum Herausziehen des Zylinderstiftes 3f aus einer entsprechenden Bohrung 5, 7 bzw. 6, 8.

Ein Kegelstift 3g kann nur in entsprechende Kegellöcher 12 in den Bauteilen 1 bzw. 2 eingesetzt werden. Dies bedeutet, dass die Kegellöcher 12 zweier Bauteile 1 bzw. 2 gemeinsam bearbeitet werden müssen, die Bauteile können nicht unabhängig voneinander gefertigt werden. Der Kegelstift kann aus hartem oder weichem Material geformt werden. Er ist sowohl für harte als auch weiche Bauteile wiederverwendbar.

In einen Kegelstift 3h ist im Unterschied zu dem Kegelstift 3g noch ein Gewindesackloch 11 eingeformt, welches wiederum zur Herausnahme des Kegelstiftes aus dem entsprechenden Kegelloch 12 dient.

Gesondert in Fig. 2a ist ein Spreizstift 3i dargestellt. In diesem Spreizstift 3i sind von beiden Stirnseiten her Schlitze 9a eingeformt, welche ein Spreizen des Mantels 13 des Spreizstiftes 3i zulassen. Zum Spreizen ist in eine Längsbohrung 14 des Spreizstiftes 3i ein Schraubenbolzen 15 eingesetzt. Dieser Schraubenbolzen 15 greift mit seinem Ende in einen Aufgleitkegel 16 ein, während ihm andererseits unterhalb eines Schraubenkopfes 17 eine Aufgleithülse 18 aufgesetzt ist. Beim Anziehen des Schraubenbolzens 15 werden auch Gleitkegel 16 und auch Gleithülse 18 zueinander gezogen, so dass der Mantel 13 in diesem Bereich aufgeweitet wird

Selbstverständlich ist es auch möglich, den Aufgleitkegel 16 ortsfest auszubilden, so dass nur die Aufgleithülse 18 zum Aufgleitkegel 16 hin verschoben wird.

Ein derartiger Spreizstift ist für harte und weiche Bauteile anwendbar und bestens wiederverwendbar. Er lässt auch eine exakte Positionierung zu. Nachteilig sind aber seine äusserst hohen Kosten durch die Herstellung und den Zusammenbau verschiedener Elemente.

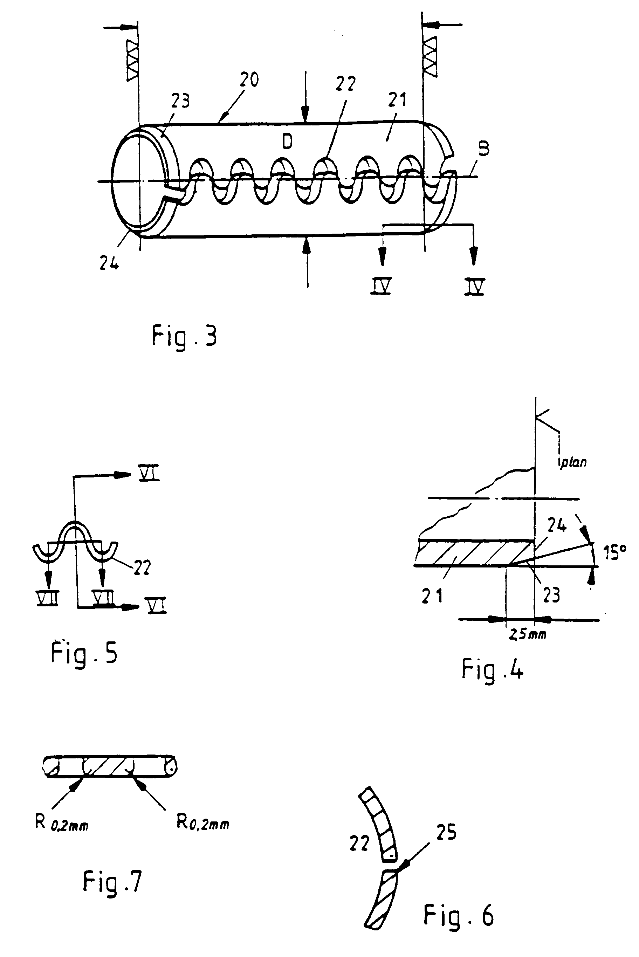

Ein erfindungsgemässes Element 20 zum Lagepositionieren von Bauteilen gem. Fig. 3 ähnelt den Spannstiften 3c und 3d. Auch hier besteht das Element 20 im wesentlichen aus einem Ringmantel 21, dem parallel zur Längsachse B ein Schlitz, bevorzugt ein Wellenschlitz 22, eingeformt ist. Wesentlich und unterschiedlich zu den bekannten Spannstiften sind dabei aber folgende Merkmale:

a) Das Element 20 weist beidseits randwärtig eine Fase 23 von 15° auf, welche etwa bei einem Element mit einem Aussendurchmesser D von 10 mm 2,5 mm lang ist. Im Gegensatz zu den bekannten Spannstiften endet jede Fase 23 in einer plangeschliffenen Stirnfläche 24, wodurch insbesondere ein Aufsetzen eines Eintreibwerkzeuges verbessert wird.

b) Aus den Figuren 5 bis 7 geht hervor, dass insbesondere die Aussenränder 25 des Wellenschlitzes 22 gerundet ausgebildet sind und zwar mit einem Radius R (R = ca. 0,2 mm) Hierdurch findet beim Einsetzen dieses erfindungsgemässen Elementes 20 in entsprechende Bohrungen 5, 7 bzw. 6, 8 keine Spanabhebung mehr statt, auch wenn das Element 20 aus hartem Material und die Bauteile 1 und 2 aus weichem Werkstoff geformt sind.

c) Das Element 20 weist bevorzugt eine Härte von Rockwell C HRC = 58 + 2 auf. Die bekannten Spannstifte sind hier wesentlich weicher.

Ein derartiges Element ist nicht nur für die Positionierung von Bauteilen, gleichgültig aus welchem Material, einsetzbar, sondern auch jederzeit wiederverwendbar.

Damit das Element einen Festsitz in den Bohrungen 5, 7 bzw. 6, 8 aufweist, benötigen diese Bohrungen 5, 7 bzw. 6, 8 eine Durchmessertoleranz von H 9,

$$\text{d.h. } 10 \, {}^{+ \, 0,36}_{- \, 0}$$

Die Toleranz des Abstandes A ist nun JT 8,

$$\text{d.h. } 100 \, {}^{+0,027}_{-0,027}$$

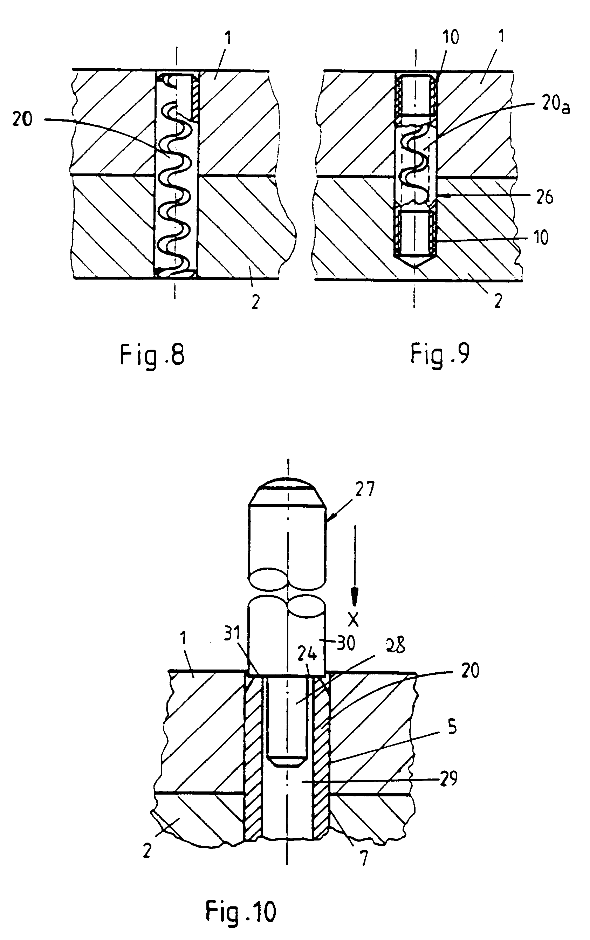

Ein derartiges Element 20 ist, wie in Fig. 8 und 9 gezeigt, sowohl in Durchgangsbohrungen als auch in Sacklochbohrungen 26 einsetzbar. Bei Bauteilen 1 und 2, welche ein Sackloch 26 bilden, besitzt das Element 20a bevorzugt beidseits ein Innengewinde 10, damit eine später beschriebene Einrichtung zum Herausziehen dieses Elementes 20a eingeschraubt werden kann. Durch die Anordnung von beidseitigen Innengewinden 10 braucht der Benutzer nicht darauf zu achten, wie herum er das Element 20 in das Sackloch 26 einsetzt.

Für das Einsetzen des Elementes 2O ist ein Dorn 27 mit Zapfen 28 vorgesehen. Der Zapfen 28 greift in Gebrauchslage in eine Axialbohrung 29 des Elementes 20 ein, wobei eine von einem Zapfen 28 und von einem Treibbolzen 30 gebildete Schulter 31 der Stirnfläche 24 plan aufsitzt. Mit einem Hammer od. dgl. kann dann der Dorn 27 in Richtung x und mit ihm das Element 20 in die entsprechenden Bohrungen 5 bzw. 7 der Bauteile 1 bzw. 2 eingetrieben werden.

Das Entfernen eines derartigen Elementes aus einer Durchgangsbohrung 5, 7 bzw. 6, 8 geschieht auf einfache Weise, indem der Dorn 27 vom entgegengesetzten Ende wiederum in das Element 20 eingesetzt und dieses durch Hammerschläge entgegen der Richtung x herausgetrieben wird.

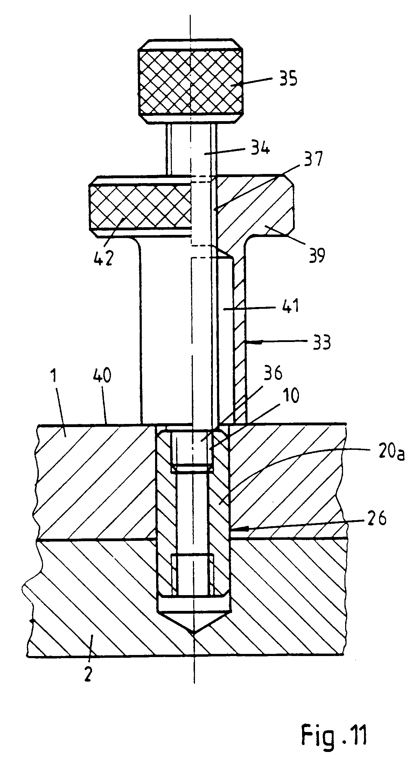

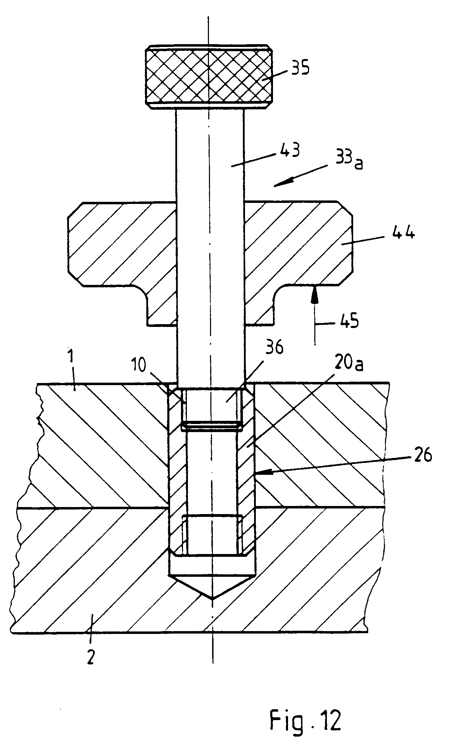

Wird jedoch ein erfindungsgemässes Element 20a, wie in den Figuren 11 und 12 gezeigt, in eine Sacklochbohrung 26 eingetrieben, so muss zu seiner Entfernung eine spezielle Einrichtung 33 zum Herausziehen des Elementes 20a benutzt werden. Diese Einrichtung 33 weist eine Gewindestange 34 mit Schraubenkopf 35 auf, wobei ein Gewindeabschnitt 36 in das Innengewinde 10 des Elementes 20a einsetzbar ist.

Ferner kämmt die Gewindestange 34 ein Innengewinde 37 in einem Druckstück 39, welches einer Oberfläche 40 eines Bauteiles 1 um das Sackloch 26 herum aufgesetzt ist. In das Druckstück 39 ist ein Innenraum 41 eingeformt, in welchem das Element 20a durch eine schraubende Bewegung der Gewindestange 34 eingezogen wird. Hierbei wird das Druckstück 39 relativ ortsfest gehalten, wozu ein entsprechender geriffelter Griffring 42 dient. Durch Drehung an 35 wird der Stift 20a herausgezogen.

Bei der Einrichtung 33a gem. Fig. 12 zum Entfernen eines Elementes 20a aus einem entsprechenden Sackloch 26 der Bauteile 1 bzw. 2 sitzt ebenfalls ein Gewindeabschnitt 36 in einem Innengewinde 10 des Elementes 20a. Allerdings ist dem Gewindeabschnitt 26 ein glatter Bolzen 43 ohne Gewinde angeformt, den ein Schlagstück 44 umgibt. Dieses Schlagstück 44 wird beispielsweise mittels Hand oder eines entsprechenden Werkzeuges in Richtung des Pfeiles 45 vorangetrieben, wobei das Schlagstück 44 bevorzugt den Schraubenkopf 35 untergreift. Auch hierdurch kann auf einfache Weise das Element 20a aus dem Sackloch 26 entnommen werden.

In einer besonderen Ausführungsform eines Elementes 20b ist in die Axialbohrung 29 ein elastischer Stab 46 eingesetzt. Dieser elastische Stab 46 kann aus einem Gummi oder beliebigen Werkstoff, wie z.B. Chloropren-Kautschuk (Warenzeichen Neoprene) mit einer Härte von 60 ± 10 Shore bestehen.

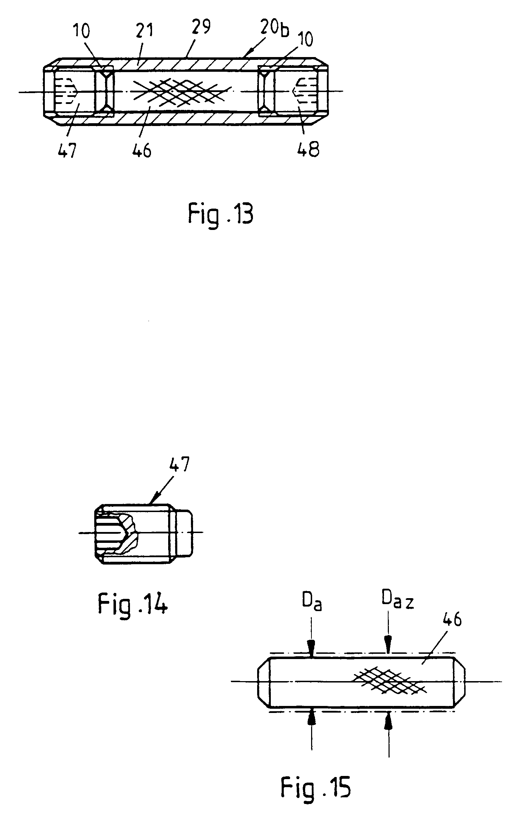

In die beidseitig eingeformten Innengewinde 10 wird je ein Gewindestift 47 und 48 eingeschraubt, welche auf den elastischen Stab 46 einen Druck ausüben, so dass dessen ursprünglicher Aussendurchmesser Da (s. Fig. 15) sich zu einem neuen Aussendurchmesser Da2 (strichpunktiert dargestellt) aufweitet. Hierdurch wird auch der Ringmantel 21 gespreizt, so dass er mit den umliegenden Bohrungswandungen einen Kraft/Formschluss eingeht.

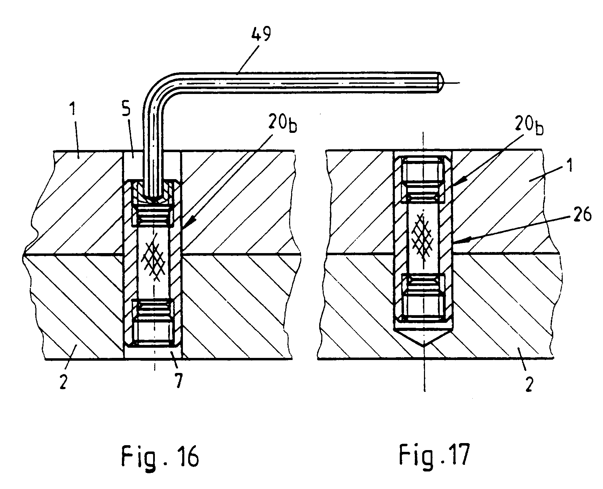

Dieses Element hat alle Vorteile des Stiftes 3i gem. Fig. 2a, ist jedoch mit wesentlich geringeren Kosten behaftet. Es kann sowohl in Durchgangsbohrungen als auch in Sacklöchern von Hand eingesetzt werden und kann dann mit einem Innensechskantschlüssel 49, wie in den Figuren 16 und 17 gezeigt, gespreizt werden. Diese Montageart vermeidet die Notwendigkeit, ein Bauteil mit Pressfassung und das zweite Bauteil mit Schiebesitz herzustellen. Es genügt eine Passungsart in der genannten Qualtät.

Der Anwendungsbereich des erfindungsgemässen Elementes 20b ist universell. Es kann überall dort eingesetzt werden, wo eine sehr genaue Positionierung erforderlich ist und diese Genauigkeit bei erneuter Montage eine Wiederholbarkeit mit exakter genauer Positionierung wünschenswert macht. Vor allem ist das Element bestimmt für Werkzeuge der Stanzerei, bei entsprechenden Vorrichtungen, Lehren, Messmitteln und Spannmitteln, aber auch bei anderen präzisen Baugruppen der Feinmechanik und Geräten des Maschinenbaus.

**Patentansprüche**

1. Element (20, 20a, 20b) zum Positionieren von Bauteilen (1, 2), wie beispielsweise von Formplatten einer Formvorrichtung, wobei dieses Element in entsprechende Bohrungen (5, 6, 7, 8), Sacklöcher (26) in den Bauteilen einsetzbar ist und aus einem Ringmantel (21) um eine Axialbohrung besteht, der einen durchgehenden Schlitz (22) aufweist, **dadurch gekennzeichnet**, daß in die Axialbohrung (29) ein elastischer Stab (46) eingesetzt ist, welcher von ein oder beiden Seiten her mit Druck beaufschlagbar ist.

2. Element nach Anspruch 1, **dadurch gekennzeichnet**, daß die Axialbohrung (29) bevorzugt beidseits ein Innengewinde (10) aufweist, in welches ein Gewindestift (47) eingesetzt ist.

3. Element nach Anspruch 2, **dadurch gekennzeichnet**, daß der Gewindestift (47) ein Innensechskantloch zur Aufnahme eines Innensechskantschlüssels (49) aufweist.

4. Element nach einem der Ansprüche 1 bis 3, **dadurch gekennzeichnet**, daß der Stab (46) aus Chloropren-Kautschuk geformt ist.

5. Element nach einem der Ansprüche 1 bis 4, **dadurch gekennzeichnet**, daß der Ringmantel (21) randwärtig eine Fase (23) aufweist, an welche eine plane Stirnfläche (24) anschließt.

6. Element nach Anspruch 5, **dadurch gekennzeichnet**, daß die Fase (23) einen Winkel von 15° hat.

7. Element nach einem der Ansprüche 1 bis 6, **dadurch gekennzeichnet**, daß der Schlitz (22) zumindest abgerundete Außenränder (25) aufweist.

EP 0 529 043 B1

8. Element nach Anspruch 7, **dadurch gekennzeichnet**, daß die Außenränder (25) mit einem Radius (R) von etwa 0,2 mm abgerundet sind.

9. Element nach einem der Ansprüche 1 bis 8, **dadurch gekennzeichnet**, daß das Element (20 bzw. 20a) aus einem Werkstoff mit der Härte von Rockwell C HRC = 58 + 2 besteht.

**Claims**

1. Element (20, 20a, 20b) for positioning components (1, 2), such as, for example, mould plates of a moulding device, said element being insertable into corresponding bores (5, 6, 7, 8), blind holes (26) in the components and comprising an annular casing (21) around an axial bore, which annular casing exhibits a continuous slit (22), characterized in that an elastic bar (46), which can be subjected to pressure from one side or both sides, is inserted into the axial bore (29).

2. Element according to Claim 1, characterized in that the axial bore (29) exhibits, preferably on both sides, an internal thread (10) into which a threaded pin (47) is inserted.

3. Element according to Claim 2, characterized in that the threaded pin (47) exhibits a hexagon-socket hole for receiving an Allen key (49).

4. Element according to one of Claims 1 to 3, characterized in that the bar (46) is formed from chloroprene rubber.

5. Element according to one of Claims 1 to 4, characterized in that the annular casing (21) exhibits, towards its borders, a bevel (23) which is adjoined by a planar end surface (24).

6. Element according to Claim 5, characterized in that the bevel (23) has an angle of 15°.

7. Element according to one of Claims 1 to 6, characterized in that the slit (22) exhibits at least rounded-off outer borders (25).

8. Element according to Claim 7, characterized in that the outer borders (25) are rounded off with a radius (R) of approximately 0.2 mm.

9. Element according to one of Claims 1 to 8, characterized in that the element (20 or 20a) consists of a material having the Rockwell hardness C HRC = 58 + 2.

**Revendications**

1. Elément (20, 20a, 20b) pour le positionnement de pièces (1, 2) telles que par exemple des supports de matrice d'un dispositif de formage , cet élément pouvant être inséré dans des perçages correspondants (5, 6, 7, 8), de trous borgnes (26) dans les pièces et consistant en une enveloppe annulaire (21) autour d'un perçage axial, enveloppe qui présente une fente (22) d'un bout à l'autre de celle-ci, élément caractérisé en ce que dans le perçage axial (29) est insérée une tige élastique (46) qui peut être soumise d'un ou des deux côtés à une pression.

2. Elément selon la revendication 1, caractérisé en ce que le percage axial (29) présente de préférence des deux côtés un filetage intérieur (10) dans lequel est insérée une tige filetée (47).

3. Elément selon la revendication 2, caractérisé en ce que la tige filetée (47) présente un trou intérieur à six pans pour recevoir une clé alène à six pans (49).

4. Elément selon l'une des revendications 1 à 3, caractérisé en ce que la tige (48) est formée en caoutchouc au chloroprène.

5. Elément selon l'une des revendications 1 à 4, caractérisé en ce que l'enveloppe annulaire (21) présente sur son bord une fibre (23) à laquelle se raccorde une face frontale plane (24).

7

6. Elément selon la revendication 5, caractérisé en ce que la fibre (23) forme un angle de 15°.

7. Elément selon l'une des revendications 1 à 6, caractérisé en ce que la fente (22) présente au moins des bords extérieurs arrondis (25).

8. Elément selon la revendication 7, caractérisé en ce que les bords extérieurs (25) sont arrondis en présentant un rayon (R) d'environ 0,2 mm.

9. Elément selon l'une des revendications 1 à 8, caractérisé en ce que l'élément (20 ou 20a) est en une matière qui présente une dureté Rockwell C HRC = 58 + 2.

EP 0 529 043 B1

Fig.1

9

Fig. 2

Fig. 2a

Fig. 3

Fig. 5

Fig. 4

Fig. 7

Fig. 6

Fig.8    Fig.9

Fig.10

EP 0 529 043 B1

Fig .11

14

Fig. 12

Fig .13

Fig .14

Fig .15

Fig. 16                    Fig. 17